# EUROPÄISCHE PATENTSCHRIFT

(11) **EP 2 285 613 B1**
(45) Veröffentlichungstag und Bekanntmachung des Hinweises auf die Patenterteilung: **25.04.2012**
(21) Anmeldenummer: 09761448.1
(22) Anmeldetag: 08.06.2009
(51) Int. Cl.: B60J 10/08, B60J 10/00

(54) **DICHTUNG FÜR EINE TÜR EINES KRAFTFAHRZEUGES**
SEAL FOR THE DOOR OF A MOTOR VEHICLE
GARNITURE POUR PORTE DE VÉHICULE AUTOMOBILE

(30) Priorität: 11.06.2008 DE 102008027877
(43) Veröffentlichungstag der Anmeldung: 23.02.2011
(73) Patentinhaber: Bayerische Motoren Werke Aktiengesellschaft, 80809 München (DE)
(72) Erfinder: BRÄUHERR, Günther, 85134 Stammham (DE)
(74) Vertreter: Günther, Hans Peter
(86) Internationale Anmeldenummer: PCT/EP2009/004107
(87) Internationale Veröffentlichungsnummer: WO 2009/149885

(56) Entgegenhaltungen:
- EP-A- 1 500 542
- DE-B3-102006 060 390
- GB-A- 1 109 513
- GB-A- 2 271 067
- US-A- 5 354 594

## Beschreibung

Die Erfindung betrifft eine Dichtung für eine Tür eines Kraftfahrzeuges, wie aus der gattungsgemäßen DE 10 2006 060 390 bereits bekannt.

Es sind bereits Dichtungen bekannt, die an einem Fensterrahmen einer Tür angeordnet sind und eine Dichtlippe aufweisen, die an einer Außenfläche eines Türausschnittes einer Karosserie anliegen. Die Dichtlippe kann direkt an dem Karosserieabschnitt des Türausschnittes anliegen.

In einer anderen Ausführungsform ist an dem Türausschnitt eine Zierleiste oder dergleichen angebracht, an deren Außenfläche die Dichtlippe der Fensterrahmendichtung anliegt. Zwischen der Außenfläche der Türausschnittsöffnung und der Dichtlippe der Fensterrahmendichtung kann es zu einer Geräuschbildung, beispielsweise durch einen "Stick-Slip-Effekt", kommen.

Aus der WO 2004/082974 A1 ist bereits eine Dichtungsleiste für eine Fahrzeugrahmenstruktur bekannt, bei der die Funktionsflächen der Dichtungsleiste zur Vermeidung eines "Stick-Slip-Effektes" mit Gleitlack überzogen sind oder beflockt sind.

Aus der GB-2271067 ist eine Dichtung bekannt, die an einem Fensterrahmen einer Fahrzeugtür angeordnet ist und zur Aufnahme und Abdichtung einer beweglichen Fensterscheibe eines Seitenfensters der Fahrzeugtür am umlaufenden Außenrand der Fensterscheibe dient. Das Profil der Dichtung weist einen U-förmigen Dichtungskanal auf, an dessen Boden Flockfasern über einen Klebestoff befestigt sind. Die Flockfasern sind mit Silikonöl oder Wachs oder einem anderen Material beschichtet. Diese Beschichtung bewirkt eine Verminderung der Reibung und eine Verminderung des Abriebs der Flockfasern. Die Flockfasern dienen dazu, das Hindurchführen der Fensterscheibe zu erleichtern. Die Flockfasern verringern somit die Gleitreibung zwischen dem Dichtungskanal und dem Außenrand der Fensterscheibe, der durch den Dichtungskanal beim Anheben und Absenken der Fensterscheibe gleitet.

Aus der EP 1 500 542 ist eine weitere Dichtungsanordnung bekannt, die zum Abdichten einer feststehenden Fensterscheibe eines Kraftfahrzeuges dient. Eine Dichtlippe der Dichtungsanordnung ist mit einer reibungsvermindernden Beflockung oder einer Beschichtung, beispielsweise einem Gleitlack versehen, um störende Reibgeräusche zu verhindern.

Aus der GB 1 109 513 ist ebenfalls eine Dichtungsanordnung zum Abdichten einer verschiebbaren Fensterscheibe gegenüber einem Fensterrahmen bekannt. Zur Erniedrigung des Reibwertes der Gleitreibung wird ein Flockmaterial verwendet.

Aus der US 5 354 594 ist ein Dichtungsprofil zum Abdichten eines Glasfensters bekannt. Die Dichtungsanordnung weist mindestens eine Dichtlippe auf, die an ihrem Abdichtungsabschnitt mit einer Beflockung versehen ist.

Aufgabe der Erfindung ist es, eine Dichtung für eine Tür eines Kraftfahrzeuges zu schaffen, bei der eine Geräuschbildung vermieden wird.

Diese Aufgabe wird durch die Merkmale des kennzeichnenden Teils des Anspruchs 1 gelöst.

Eine erfindungsgemäße Dichtung für eine Tür eines Kraftfahrzeuges ist an einem Fensterrahmen einer Tür angeordnet. Die Dichtung weist eine Dichtlippe auf, die in einem geschlossenen Zustand der Tür an einer Außenfläche eines Karosseriebauteils des Kraftfahrzeuges anliegt. Die Außenfläche der Dichtlippe der Dichtung weist eine doppelte Beschichtung aus einer Beflockung und einem Gleitlack auf. Durch diese Beschichtung wird der Reibwert gesenkt und damit ein "Stick-Slip-Effekt" beim Schließen der Tür und beim Fahren über unebene Fahrbahnen, die eine Relativbewegung zwischen der Tür und der Karosserie bewirken, verhindert.

In einer vorteilhaften Ausführungsform schließt sich an die Außenfläche der Dichtlippe eine Beflockungsschicht an. Die beflockte Außenfläche der Dichtlippe ist zusätzlich mit einer Gleitlackschicht überzogen.

Eine Dicke t der Gleitlackschicht liegt vorteilhafterweise in einem Bereich von 13 µm ≥ t ≥ 4 µm.

Eine Ausführungsform der Erfindung wird nachstehend anhand der Zeichnungen beispielshalber beschrieben. Dabei zeigen:
- Fig. 1: eine Seitenansicht eines Personenkraftwagens,
- Fig. 2: eine Querschnittsansicht längs der Linie I-I in der Fig. 1, bei der eine Dichtlippe einer Fensterrahmendichtung im geschlossenen Zustand der Tür direkt an einem Karosserieabschnitt einer Türausschnittsöffnung anliegt und
- Fig. 3: eine Querschnittsansicht längs der Linie I-I in der Fig. 1, bei der an einer Türausschnittsöffnung eine Zierleiste angeordnet ist, an der eine Dichtlippe eines Fensterrahmens einer Tür im geschlossenen Zustand der Tür anliegt.

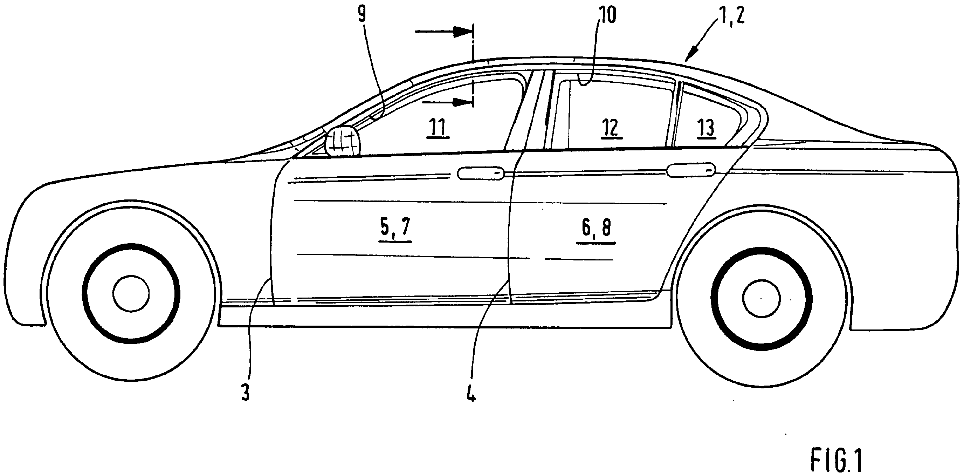

Die Fig. 1 zeigt eine Seitenansicht eines Kraftfahrzeuges 1. In einer Karosserie 2 des Kraftfahrzeuges 1 ist eine vordere Türausschnittsöffnung 3 und eine hintere Türausschnittsöffnung 4 ausgebildet, in der jeweils eine vordere Tür 5 und eine hintere Tür 6 in bekannter Weise schwenkbar angeordnet sind.

Die jeweilige Tür 5, 6 weist einen Türkörper 7, 8 sowie jeweils einen an dem jeweiligen Türkörper 7, 8 ausgebildeten Fensterrahmen 9, 10 auf. In dem jeweiligen Fensterrahmen 9, 10 ist jeweils eine Seitenscheibe 11, 12 verschiebbar angeordnet. Bei der hinteren Tür 6 ist zusätzlich eine hintere Seitenscheibe 13 im Fensterrahmen 10 angeordnet, die beispielsweise fest oder schwenkbar angeordnet ist.

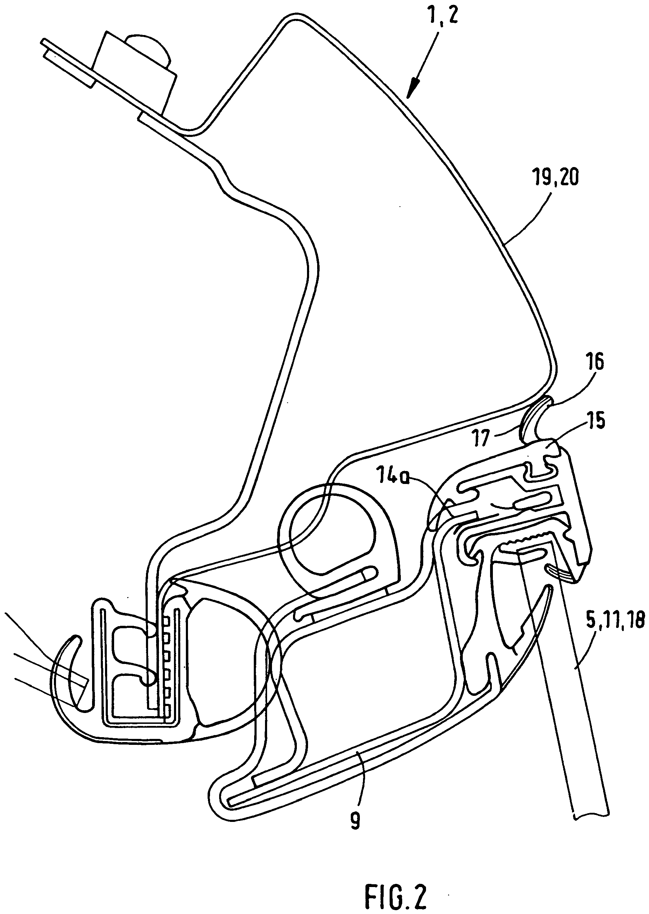

Wie aus der Fig. 2 hervorgeht, ist an einem vorderen, oberen Flansch 14a des Fensterrahmens 9 eine Fensterrahmendichtung 15 befestigt. Die Fensterrahmendichtung 15 weist eine Dichtlippe 16 auf. Die Dichtlippe 16 liegt mit einer Außenfläche 17 im geschlossenen Zustand 18 der Tür 5 an einer Außenfläche 19 eines Dachrahmenabschnittes 20 der Karosserie 2 an.

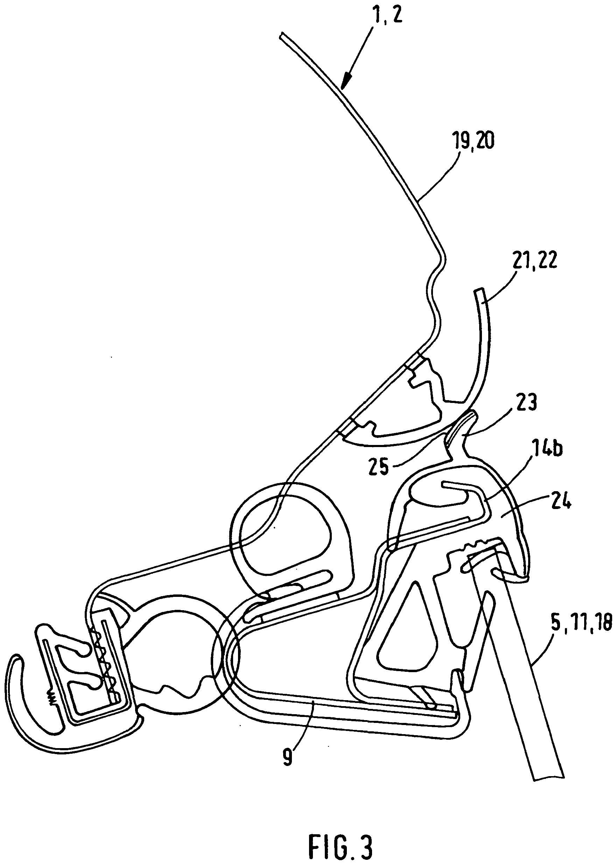

Die Querschnittsansicht der Fig. 3 unterscheidet sich von der Querschnittsansicht der Fig. 2 im Wesentlichen dadurch, dass an dem Dachrahmenabschnitt 20 eine zusätzliche Zierleiste 21 angeordnet ist. An einer Außenfläche 22 der Zierleiste 21 liegt eine Dichtlippe 23 einer Fensterrahmendichtung 24 an. Die Fensterrahmendichtung 24 ist an einem vorderen, oberen Flansch 14b des Fensterrahmens 9 befestigt. Eine Außenfläche 25 der Dichtlippe 23 liegt an der Außenfläche 22 der Zierleiste 21 im geschlossenen Zustand 18 der Tür 5 an.

Die Außenfläche 17 der Dichtlippe 16 bzw. die Außenfläche 25 der Dichtlippe 23 weist eine doppelte Beschichtung auf. In einer Ausführungsform wird zunächst auf die jeweilige Außenfläche 17, 25 der Dichtlippe 16, 23 eine Beflockung in bekannter Weise aufgebracht. Anschließend erfolgt eine weitere Beschichtung mit einem Gleitlack.

Die bei der Beflockung verwendeten Flocken weisen bei einer Ausführungsform eine Länge l von 0,4 mm ≤ l ≤ 1,2 mm auf. Die Flocken sind beispielsweise aus POM oder PA hergestellt. Die Dicke t der aufgetragenen Gleitlackschicht liegt in einer Ausführungsform bei 13 µm ≥ t ≥ 4 µm.

Die Schichtdicke t des Gleitlackes hängt von verschiedenen Parametern ab. Dazu gehört unter anderem die Beschaffenheit der Außenfläche 19 des Dachrahmenabschnittes 20 bzw. der Außenfläche 22 der Zierleiste 21. Auch bei einer pulverbeschichteten Außenfläche 22 der Zierleiste 21, die einen erhöhten Reibwert aufweist, führt die doppelte Beschichtung der Dichtlippe 16, 23 zur Vermeidung eines "Stick-Slip"-Effektes.

In Versuchen hat es sich gezeigt, dass sich durch die doppelte Beschichtung der Außenfläche 17, 25 der Dichtlippe 16, 23 beim Schließen der Tür und dem dabei erfolgenden Anlegen der Außenfläche 17, 22 der Dichtlippe 16, 23 ein kontinuierlicher Kraftanstieg über dem vorgegebenen Weg ergibt.

Durch die doppelte Beschichtung der Außenfläche 17, 25 der Dichtlippe 16, 23 wird über die Lebenszeit der Dichtlippe 16, 23 ein Haften der Außenfläche 17, 25 der Dichtlippe 16, 23 an der Außenfläche 19 des Dachrahmenabschnittes 20 bzw. an der Außenfläche 22 der Zierleiste 21 vermieden. Dadurch wird auch eine Geräuschbildung verhindert.

## Patentansprüche

1. Dichtung (15, 24) für eine Tür (5, 6) eines Kraftfahrzeuges (1), wobei die Dichtung (15, 24) an einem Fensterrahmen (9, 10) der Tür (5, 6) angeordnet ist, wobei die Dichtung (15, 24) eine Dichtlippe (16, 23) aufweist, die in einem geschlossenen Zustand (18) der Tür (5, 6) an einer Außenfläche (19, 22) eines Karosseriebauteils (20, 21) des Kraftfahrzeuges (1) anliegt,
**dadurch gekennzeichnet,**
**dass** das Karosseriebauteil (20, 21), an dessen Außenfläche (19, 22) die Dichtlippe (16, 23) der jeweiligen Fensterrahmendichtung (15, 24) anliegt, ein Dachrahmenabschnitt (20) oder eine Zierleiste (21) ist, und
**dass** die Außenfläche (17, 25) der Dichtlippe (16, 23) der Dichtung (15, 24) eine doppelte Beschichtung aus einer Beflockung und einem Gleitlack aufweist.

2. Dichtung nach Anspruch 1,
**dadurch gekennzeichnet, dass** sich an die Außenfläche (17, 25) der Dichtlippe (16, 23) eine Beflockungsschicht anschließt und dass die beflockte Außenfläche (17, 25) der Dichtlippe (16, 23) mit einer Gleitlackschicht überzogen ist.

3. Dichtung nach Anspruch 2,
**dadurch gekennzeichnet, dass** eine Dicke t der Gleitlackschicht in einem Bereich von 13 µm ≥ t ≥ 4 µm liegt.

## Claims

1. A seal (15, 24) for a door (5, 6) of a motor vehicle (1), wherein the seal (15, 24) is arranged on a window frame (9, 10) of the door (5, 6), the seal (15, 24) having a sealing lip (16, 23), which, in a closed state (18) of the door (5, 6), rests on an outer face (19, 22) of a body component (20, 21) of the motor vehicle (1),
**characterised in that**
the body component (20, 21), on the outer face (19, 22) of which the sealing lip (16, 23) of the respective window frame seal (15, 24) rests, is a roof frame portion (20) or a decorative strip (21), and **in that** the outer face (17, 25) of the sealing lip (16, 23) of the seal (15, 24) has a double coating of a flock coating and an anti-friction lacquer.

2. A seal according to claim 1,
**characterised in that** a flock layer adjoins the outer face (17, 25) of the sealing lip (16, 23) and **in that** the flocked outer face (17, 25) of the sealing lip (16, 23) is covered with an anti-friction lacquer layer.

3. A seal according to claim 2,
**characterised in that** a thickness t of the anti-friction lacquer layer is in a range of 13 µm ≥ t ≥ 4 µm.

## Revendications

1. Garniture de joint (15, 24) de porte (5, 6) de véhicule automobile (1),
* la garniture de joint (15, 24) étant installée sur le châssis de la fenêtre (9, 10) de la porte (5, 6),
* la garniture de joint (15, 24) ayant une lèvre d'étanchéité (16, 23) qui, en position de fermeture (18) de la porte (5, 6), s'applique contre la surface extérieure (19, 22) d'une pièce de carrosserie (20, 21) du véhicule (1),
garniture de joint **caractérisée en ce que**
- la surface extérieure (19, 22) de la pièce de carrosserie (20, 21) contre laquelle s'applique la lèvre d'étanchéité (16, 23) de la garniture de joint de châssis de fenêtre (15, 24) respectif est un segment de châssis de toit (20) ou d'une baguette décorative (21), et
- la surface extérieure (17, 25) de la lèvre d'étanchéité (16, 23) de la garniture de joint (15, 24) a un double revêtement formé d'un flocage et d'un vernis lisse.

2. Garniture de joint selon la revendication 1,
**caractérisée en ce que**
la surface extérieure (17, 25) de la lèvre d'étanchéité (16, 23) comporte une couche floquée et la surface extérieure (17, 25) floquée de la lèvre d'étanchéité (16, 23) est revêtue d'une couche de vernis lisse.

3. Garniture de joint selon la revendication 2,
**caractérisée en ce que**
l'épaisseur (t) de la couche de vernis lisse est située dans une plage telle que 13 µm ≥ t ≥ 4 µm.
